(19) Europäisches Patentamt

European Patent Office

Office européen des brevets

(11) Publication number: 0 597 173 A1

(12) **EUROPEAN PATENT APPLICATION**

(21) Application number: 93107175.7

(22) Date of filing: 03.05.93

(51) Int. Cl.5: **F02M 27/00, F02M 35/024**

(30) Priority: 11.11.92 JP 324623/92

(43) Date of publication of application:
18.05.94 Bulletin 94/20

(84) Designated Contracting States:
DE FR GB IT

(71) Applicant: AMOS Inc.
8-3, Takezono 1-chome, Tsukuba-shi,
Ibaraki-ken 305(JP)

(72) Inventor: Fujita, Fujio
6167-205, Terada
Toride-shi, Ibaraki-ken 302(JP)

(74) Representative: Goddar, Heinz J., Dr. et al
FORRESTER & BOEHMERT
Franz-Joseph-Strasse 38
D-80801 München (DE)

(54) **Air filter and method of manufacturing the same.**

(57) An air filter (1) capable of improving a combustion efficiency of the engine of a vehicle. A functional film (5) comprising a dispersion of particles of a silicon mineral and yttrium, barium and cerium in a film forming resin laminated on a metallic substrate (4) and the resultant laminated transit member (3, 7, 8, 9) is punched to form a multiple through-holes. The so formed laminated member constitutes a transit member (3, 7, 8, 9). The transit member (3, 7, 8, 9) is incorporated into a known filter body (2) to thereby manufacture the air filter (1). Since the conventional filter body (2) is combined with the transit member (3, 7, 8, 9), dirt or contaminants in the air are removed by the filter body (2). Since on passage through the transmit member (3, 7, 8, 9), air is activated by the action of a wave-generating sintered product contained in the functional film (5) in the form of particles. The air which has been cleaned and activated is fed into the engine. This eventually leads to an improvements of the combustion efficiency of the engine.

FIG. I

The present invention relates to an air filter for vehicles and a method of manufacturing the air filter to be used in vehicles (hereinafter referred to as an air filter) for cleaning air fed into a gasoline engine or a diesel engine.

A conventional air filter functions to eliminate dirt or contaminants from air which is fed into an engine of the vehicle but it does not contribute to enhanced mileage, or fuel efficiency. Meanwhile, there are proposed devices for influencing electromagnetic wave generated by magnet, etc. (which is disclosed in Japanese Patent Laid-Open Publication Nos. 60-224,964 and 63-50,655) or ozone (which is disclosed in U.S. Patent No. 4,519,357) upon air which is fed into the engine whereby the combustion efficiency is improved to thereby reduce the mileage, increase the output of the engine and reduce a toxic emission gas. However, this device is temporarily effective but does not last stably, and furthermore this device per se is complex and difficult to be replaced by another device and difficult to be maintained.

The present invention has been made in view of the circumstances set forth above. It is an object of the present invention to provide an air filter and a method of manufacturing the air filter capable of cleaning air to be fed into an engine and improving the combustion efficiency for a long period.

The air filter includes a filter body and a transit member incorporated into the filter body and having a plurality of through-holes. The transit member comprises a metallic substrate and a functional film on the metallic substrate wherein the functional film includes particles comprising a reaction product of a silicon-bearing mineral and yttrium, barium, and cerium and a particle binder, such as a film forming resin binder. The transit member is cooperably disposed relative to the filter body such that preferably the air is filtered before flowing through the transit member.

The functional film useful in the present invention should be a film of a high temperature sintered reaction product of a silicon-bearing mineral and yttrium, barium and cerium each present in an amount of 1 to 5 parts by weight per 100 parts by weight of silicon in the silicon-bearing mineral. In particular, the sintered reaction product comprises the silicon-bearing mineral reacted with yttrium, barium, and cerium by sintering at elevated temperature above the melting points of yttrium, barium, and cerium. The silicon minerals used in the present invention should be predominantly made of silicon and include, for example, siliceous materials such as dacite, rhyolite and the like. When these mineral and elements are sintered and treated in a specific manner as described hereinafter, the resultant sintered product is capable of spontaneously generating a wave whose wavelength is in the range of from 6 to 10 microns.

According to the air filter of the present invention, the transit member preferably is disposed in a space through which air passes the filter body.

The transit member can be formed in an appropriate shape such as a cylindrical shape, a flat plate shape, etc.

Fig. 1 is a perspective view showing an air filter according to a preferred embodiment of the present invention;

Fig. 2 is a plan view of the air filter in Fig. 1;

Fig. 3 is a lateral cross-sectional view of the air filter in Fig. 1;

Fig. 4 is a perspective view showing a transit member constituting the air filter in Fig. 1;

Fig. 5 is a cross-sectional view showing a functional film laminated on a metallic substrate;

Fig. 6 is a cross-sectional view showing a laminated member having a multitude of through-holes;

Fig. 7 is a plan view of the laminated member having a multitude of through-holes in Fig. 6;

Fig. 8 is a perspective view showing another example of the transit member;

Fig. 9 is a plan view showing still another example of the transit member; and

Fig. 10 is a plan view showing further another example of the transit member.

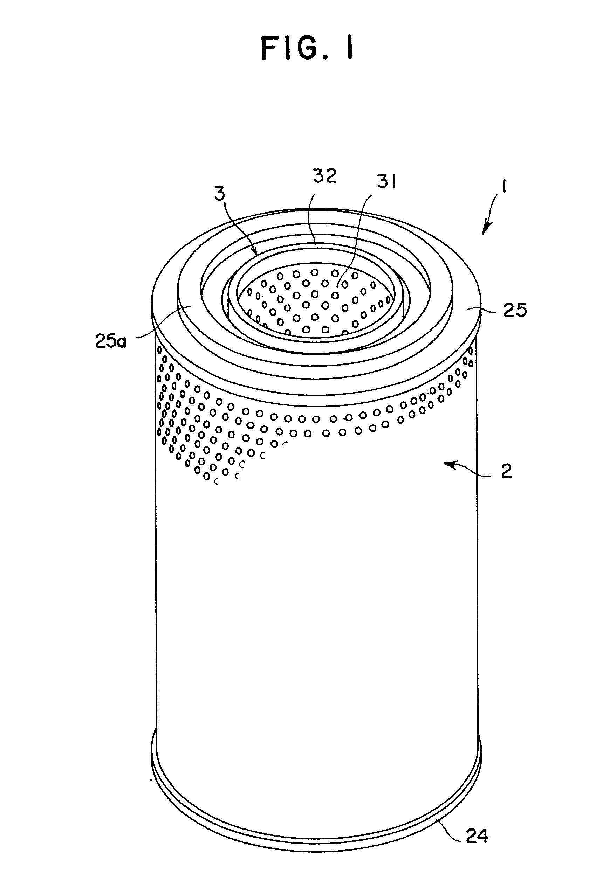

An air filter and a method of manufacturing the air filter according to the present invention will be described with reference to Figs. 1 to 10.

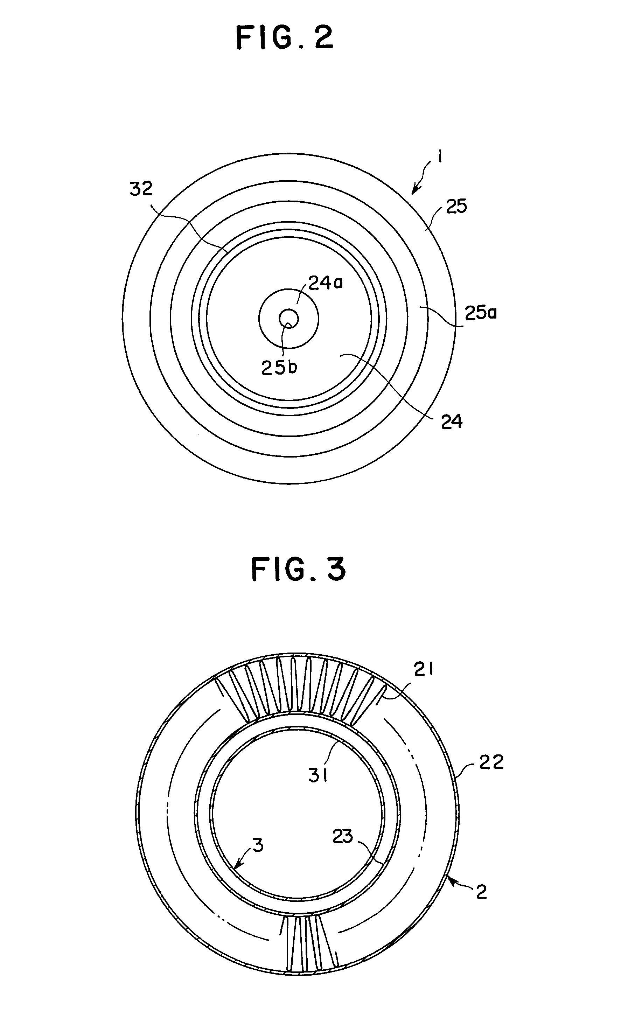

Figs. 1 to 3 show an air filter according to a preferred embodiment of the present invention in which Fig. 1 is a perspective view thereof, Fig. 2 is a plan view thereof and Fig. 3 is a lateral cross-sectional view thereof.

An air filter 1 as illustrated in Figs. 1 to 3 is used in a truck and a bus and comprises a cylindrical filter body 2 and a cylindrical transit member 3 which is inserted into the filter body 2 and spaced from the filter body 2 at a slight gap.

The filter body 2 is a known art and comprises an outer cylindrical member 22 having a multitude of through-holes on the entire surface thereof, an inner cylindrical member 23 having a multitude of through-holes on the entire surface thereof, a filter member 21 folded zigzag and formed of non-woven cloth and accommodated in a space between the outer and inner cylindrical members 22 and 23, a circular lower plate 24 and a ring-shaped upper plate 25 wherein the space between the outer and inner cylindrical members 22 and 23 is closed by the upper plate 25 at the upper end thereof and the entire lower end of the filter body 2 is closed by the lower plate 24. An inwardly directed recess 24a is provided at the central portion of the lower plate 24 and a hole 24b through which a bolt is inserted is provided at the center of the recess 24a. A ring-shaped rubber packing 25a is attached to an inner surface of the upper plate 25.

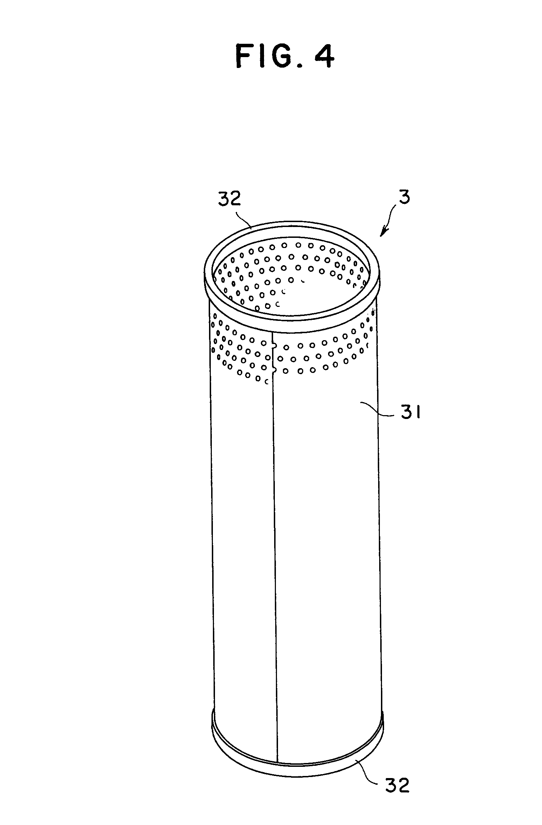

The transit member 3 comprises, as shown in Fig. 4, a cylindrical member 31 having a multitude of through-holes on the entire surface thereof and resin packings 32 attached respectively to the upper and lower ends thereof. The transit member 3 is manufactured as described below.

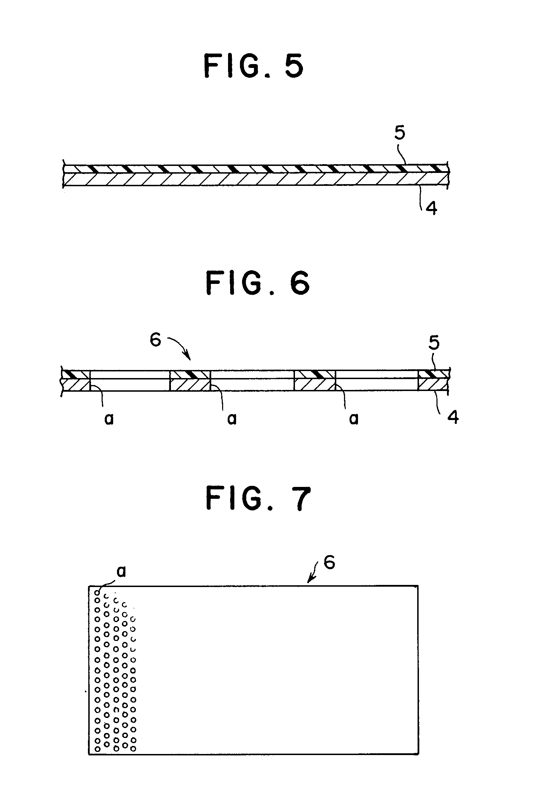

A functional film 5 is laminated on one surface of a metallic substrate 4 such as an aluminum plate, a copper plate and a stainless plate by adhesives (Fig. 5) and the metallic substrate 4 laminated by the functional film 5 is punched at the entire surface thereof so that a multitude of through-holes are formed whereby a laminated member 6 is formed (Figs. 6 and 7). Successively, paint is applied to entire surface of the laminated member 6 and thereafter the laminated member 6 is bent in a cylindrical shape in the manner that the functional film 5 is directed outward. Then, both ends of the laminated member 6 are welded at several portions thereof so as to form a cylindrical member 31. Packings 32 are engaged in the upper and lower end peripheries of the cylindrical member 31.

Fabrication of the functional film 5 to be laminated on a metallic substrate is described.

A silicon-bearing mineral, which is mainly comprised of silicon and occurs in nature, is powdered to particles with a size ranging from 200 to 400 meshes. Likewise, yttrium, barium and cerium are each powdered to particles with a size ranging from 200 to 400 meshes. The mineral particles and the particles of yttrium, barium and cerium are mixed in an amount of each of yttrium, barium and cerium of 1 to 5 parts by weight per 100 parts by weight of silicon in the mineral. Preferably, particles comprising at least one element selected from lanthanum (La), cobalt (Co), praseodymium (Pr), neodymium (Nd) and manganese (Mn) should be further present each in an amount of from 0.5 to 2 parts by weight of the silicon in the silicon-bearing mineral. The resulting mixture is sintered at a high temperature of from 1800 to 2000 °C for 6 to 12 hours, and then cooled down to a temperature of -150 to -200 °C for 6 to 12 hours to thereby obtain a high temperature sintered reaction product having the wave-generating effect. The sintered product comprises the silicon-bearing mineral reacted with yttrium, barium, and cerium by sintering at an elevated temperature above the melting points of yttrium, barium, and cerium. Preferably, the sintered product is returned to ambient temperature and then cooled down. The so manufactured sintered product can generate a wave whose wavelength ranges from 6 to 10 microns as measured by a measuring device comprising an SS series system spectrophotometer (in particular, an SS-25C/GD type System Spectrophotometer Type A manufactured by Nippon Spectral, Japan). The reason for this is not known at the present stage of our investigations but such a wave as set out above is generated spontaneously. Owing to the minute wave generation, the sintered product functions to activate materials, such as oxygen in the air, surrounding the sintered product.

For the formation of the functional film 5, the sintered reaction product and a desired type of resin material are, respectively, divided into fine particles and then mixed together to obtain a mixture. The resin material should be one which is film-forming formed in a known method and typical examples of such a resin material include polypropylene, polyethylene, vinyl chloride resin and the like although other resins including thermosetting resins may also be used.

The resultant mixture is compressed at a high pressure to thereby obtain an additive, for example, in the form of pellets. The additive is added to and mixed with a resin material of the type as used above in an amount of the particles of from 0.01 to 0.1 wt%, based on the mixture, followed by making a film by any known appropriate film-making procedure. The functional film 5 typically has a thickness of from 10 to 20 microns.

Example

100 parts by weight, based on silicone, of dacite powder with a 200 to 400 mesh size was mixed with 3.5 parts by weight of yttrium powder (200-400 mesh size), 3.5 parts by weight of barium powder (200-400 mesh size) and 3.5 parts by weight of cerium powder (200-400 mesh size) were mixed and further mixed with 1 part by weight of lanthanum powder (200-400 mesh size), 1 part of weight of cobalt powder (200-400 mesh size), 1 part by weight of praseodymium powder (200-400 mesh size) and 1 part by weight of neodymium powder (200-400 mesh size), and still further mixed with 2 parts by weight of manganese powder (200-400 mesh size) and sintered at a temperature of 2000 °C for 10 hours. Then, the sintered product was returned to ambient temperatures, followed by cooling to a temperature of -150 °C for 10 hours.

The resultant product was divided into fine pieces and mixed with divided pieces of a polypropylene resin. A high pressure of 5 Kg/cm$^2$ is applied to the resultant mixture to thereby obtain an additive in the

3

form of the pellet. The resultant additive is added to the polypropylene resin and agitated sufficiently to thereby obtain a resin material (the sintered product is 0.05 wt% relative to the polypropylene). Using this resin material, a functional film having a thickness of 20 microns is prepared. Successively, the film is laminated onto the metallic substrate using adhesives as shown in Fig. 5 and the metallic substrate laminated by the film is punched as shown in Figs. 6 and 7. Subsequently, paint serving as a protective layer is applied to the metallic substrate laminated by the film and the metallic substrate is worked so as to be cylindrical to thereby obtain the transit member.

The thus obtained cylindrical transit member 3 is incorporated into the filter body to thereby obtain an air filter.

The filter was subjected to measurements of traveling tests set forth hereunder as Comparative Tests A and B.

(Comparative Test A)

Traveling tests using trucks denoted at Nos. 1 to 4 have been carried out for measuring fuel efficiency in km/liter. The results of the test are shown in a Table 1. Each truck travels with a heavy cargo.

No. 1:   Isuzu L6-300PS (a ten-ton truck)
No. 2:   Isuzu L6-300PS (a ten-ton truck)
No. 3:   Mitsubishi L6-245PS (a four-ton truck)
No. 4:   Mitsubishi L6-215PS (a four-ton truck)

In Table 1, denoted at (1) is the case where the conventional air filter composed of the filter body 2 alone is used and at (2) is the case where the air filter 1 combined with the transit member 3 is used. As evident from the Table 1, when the air filter denoted at (2) according to the present invention is used, the fuel efficiency (km/liter) is improved 1.1 to 1.6 times as compared to that of the conventional air filter. Furthermore, the engine is high powered and a black smoke contained in the emission gas is remarkably reduced.

(Comparative Test B)

Traveling tests using buses denoted at Nos. 5 to 7 have been carried out for measuring a density of the emission gas. The results of tests are shown in a Table 2. The traveling tests have been carried out at Tateyama Kanko Tunnel (7 km extending from Tateyama to Kurobe). The site where the tests have been carried out is positioned at 2,500 m from the sea level where the density of oxygen is very low so that the density of the emission gas becomes high compared with that in the level land. In the measurement, a smoke tester made of Bandai Co. is used. Degree of dirt or contaminants (%) was measured after the emission gas which is exhausted from an exhaust pipe has passed through a filter paper for four seconds. The trucks denoted at Nos. 5 to 7 are as follows.

No. 5:   Isuzu P-LV318N
No. 6:   Isuzu P-LV318N
No. 7:   Hino K-RU606AA

In Table 2, denoted at (1) is the case where the conventional air filter composed of the filter body 2 alone is used and at (2) is the case where the air filter 1 combined with the transit member 3 is used. As evident from the Table 2, when the air filter denoted at (2) according to the present invention is used, the degree of dirt or contaminants is improved by about 50 to 70 % in average compared with the conventional air filter.

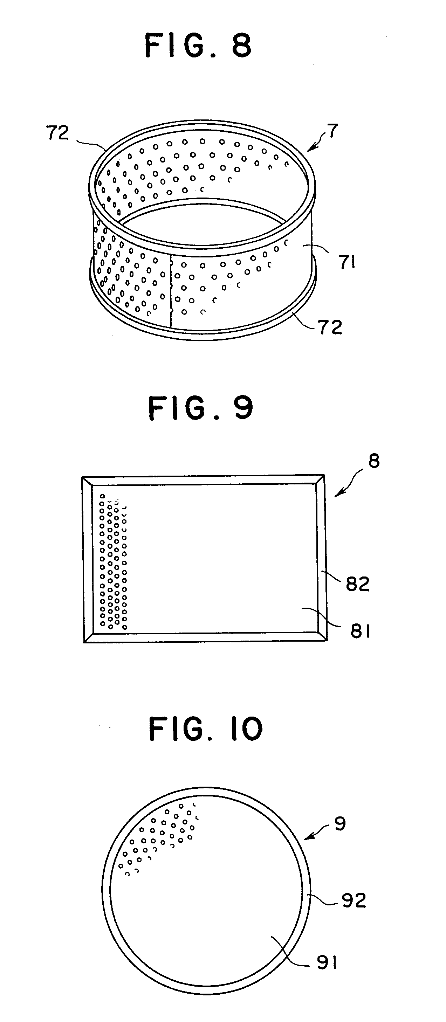

As evident from the preferred embodiment of the present invention, the present air filter is a combination of the filter body which has been conventionally used and the transit member. Accordingly, the air filter is structured to combine with the transit member which corresponds to the shape of the filter body mounted on the vehicles. Although the air filter 1 according to the preferred embodiment has a long cylindrical transit member 3, the air filter 1 can have transit members as illustrated in Figs. 8 to 10 which are for use in small vehicles such as automobiles. A transit member 7 as illustrated in Fig. 8 comprises a short cylindrical member 71 formed of a laminated member having a multitude of through-holes and resin packings 72 attached to the upper and lower ends of the cylindrical member 71. A transit member 8 as illustrated in Fig. 9 comprises a square flat member 81 formed of a porous laminated member and a packing 82 attached to the periphery of the flat member 81. A transit member 9 as illustrated in Fig. 10 comprises a circular flat member 91 formed of a laminated member 91 having a multitude of through-holes and a packing 92 attached to the periphery of the flat member 91.

The air filter according to the present invention comprises a filter body and a transit member both having a multitude of through-holes, wherein the transit member comprises a laminated member including a metallic substrate and a functional film which is laminated on the metallic substrate. The functional film comprises a dispersion of particles of a reaction product of a silicon-bearing mineral and yttrium, barium, cerium in a film forming resin binder. The transit member is incorporated into the filter body; that is, the conventional filter body is combined with the transit member manufactured by the present invention so that dirt or contaminants in the air are first removed by means of the filter body. On passage through the transmit member 3, air is activated by the action of the wave-generating sintered product contained in the functional film 5 in the form of particles. The air which has been cleaned and activated as stated above is fed into the engine. This eventually leads to an improvement of the combustion efficiency of the engine. Accordingly, owing to the improvement of the combustion efficiency, the mileage is reduced and the engine is high powered, and the black smoke in the emission gas is reduced, providing substantial improvement in engine operation which has been desired earnestly in automobile and other internal combustion engines.

Although a particular preferred embodiment of the invention has been disclosed in detail for illustrative purpose, it will be recognized that variations or modifications of the disclosed apparatus, including the rearrangement of parts, lie within the scope of the present invention.

Table 1

| Vehicle | Air filter | Fuel Efficiency (km/liter) |
|---------|-----------|---------------------------|
| No. 1 | (1)<br>(2) | 2.56 - 2.67<br>3.17 - 4.08 |
| No. 2 | (1)<br>(2) | 2.40 - 2.45<br>3.08 - 3.89 |
| No. 3 | (1)<br>(2) | 4.70 - 4.88<br>6.00 - 6.18 |
| No. 4 | (1)<br>(2) | 4.81 - 4.88<br>5.44 - 5.68 |

Table 2

| Vehicle | Air Filter | Degree of Pollutant (%) | | | |
|---------|-----------|--------|------------------|-----------|---------|
| | | Idling | Free Acceleration | Traveling | Average |
| No. 5 | (1)<br>(2) | 14<br>12 | 22<br>13 | 24<br>13 | 20<br>13 |
| No. 6 | (1)<br>(2) | 32<br>10 | 16<br>13 | 22<br>13 | 23<br>12 |
| No. 7 | (1)<br>(2) | 18<br>10 | 18<br>14 | 17<br>12 | 18<br>12 |

## Claims

1. An air filter (1) of the type having a filter body (2), characterized by a transit member (3, 7, 8, 9) cooperably associated with said filter body (2) and including a plurality of through-holes, said transit member (3, 7, 8, 9) comprising a metallic substrate (4) and a functional film (5) on said metallic substrate (4), said film including particles comprising a reaction product of a silicon-bearing mineral and yttrium, barium, cerium, and a particle binder.

2. An air filter (1) according to claim 1, wherein paint is applied to the transit member (3, 7, 8, 9).

3. An air filter (1) according to claim 1, wherein the transit member (3, 7, 8, 9) is disposed in a space through which air passes the filter body (2).

4. An air filter (1) according to claim 1, wherein the transit member (3, 7, 8, 9) is cylindrical.

5. An air filter (1) according to claim 1, wherein the transit member (3, 7, 8, 9) is formed as a flat plate.

6. An air filter (1) according to claim 2, wherein the transit member (3, 7, 8, 9) is disposed in a space through which air is passed the filter body (2).

7. An air filter (1) according to claim 2, wherein the transit member (3, 7, 8, 9) is cylindrical.

8. An air filter (1) according to claim 3, wherein the transit member (3, 7, 8, 9) is cylindrical.

9. An air filter (1) according to claim 2, wherein the transit member (3, 7, 8, 9) is formed as a flat plate.

10. An air filter (1) according to claim 3, wherein the transit member (3, 7, 8, 9) is formed as a flat plate.

11. An air filter (1) of the type having a filter body (2), characterized by a transit member (3, 7, 8, 9) cooperably associated with said filter body (2) and including a multitude of through-holes, said transit member (3, 7, 8, 9) comprising a metallic substrate (4) and a functional film (5) on the metallic substrate (4), said functional film (5) including particles comprising a reaction product of a silicon-bearing mineral and yttrium, barium, cerium and a resin particle binder, said particles having a 200 to 400 mesh size, said functional film (5) being effective to generate a wave whose wavelength ranges from 6 to 10 microns.

12. An air filter (1) according to claim 11, wherein paint is applied to the laminated transit member (3, 7, 8, 9).

13. An air filter (1) according to claim 11, wherein said particles are present in an amount of 0.01 to 0.1 wt% based on the dispersion.

14. An air filter (1) according to claim 11, wherein said silicon-bearing mineral is a siliceous material.

15. An air filter (1) according to claim 13, wherein said siliceous material is dacite.

16. An air filter (1) according to claim 11, wherein said silicon-bearing mineral is rhyolite.

17. An air filter (1) according to claim 11, wherein a ratio by weight between the silicon in said silicon-bearing mineral and said elements is in the rage of 100 : 1 to 100 : 5.

18. An air filter (1) according to claim 11, wherein said particles further comprise at least one element selected from the group consisting of La, Co, Pr, Nd and Mn in an amount of from 0.5 to 2 parts by weight per 100 parts by weight of silicon in the silicon-bearing mineral.

19. An air filter (1) according to claim 11, wherein said functional film (5) has a thickness of from 10 to 20 microns.

20. In a method of manufacturing an air filter (1) having a filter body (2), characterized by incorporating into said filter body (2) a transit member (3, 7, 8, 9) formed by the steps of:
    providing particles of a silicon-bearing mineral having a 200 to 400 mesh size;
    providing particles of yttrium, barium and cerium elements having a 200 to 400 mesh size;
    mixing the particles;
    subjecting the resultant mixture to sintering at a temperature of from 1800 to 2000 °C;
    cooling down the sintered mixture to a temperature of -150 to -200 °C thereby obtaining a sintered product capable of spontaneously generating a wave;
    mixing the sintered product after division into fine particles with a resin binder; and
    forming a film of the mixture on a metallic substrate.

21. The method according to claim 20, further characterized by returning the sintered mixture to ambient temperatures prior to the cooling step.

22. `The method according to claim 20, further characterized by applying paint on the film covered substrate.

23. The method according to claim 20, wherein said silicon-bearing mineral is dacite.

24. The method according to claim 20, wherein said silicon-bearing mineral is rhyolite.

25. The method according to claim 20, wherein a ratio by weight between the silicon in said silicon-bearing mineral and said elements in the range of 100 : 1 to 100 : 5.

26. The method according to claim 20, further characterized by providing additional particles comprising at least one element selected from the group consisting of La, Co, Pr, Nd and Mn in an amount of from 0.5 to 2 parts by weight per 100 parts by weight of silicon in the silicon-bearing mineral.

# FIG. 1

# FIG. 2

# FIG. 3

# FIG. 4

## FIG. 5

## FIG. 6

## FIG. 7

# FIG. 8

# FIG. 9

# FIG. IO

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | CH-A-400 671 (TECALEMIT)<br><br>* page 2, line 15 - line 52; figure 1 *<br>--- | 1,3,4,8,11 | F02M27/00<br>F02M35/024 |
| A | US-A-4 313 740 (KALISHMAN)<br>--- | | |
| A | US-A-4 071 004 (OSTERGAARD)<br>----- | | |

TECHNICAL FIELDS
SEARCHED      (Int.Cl.5)

F02M

The present search report has been drawn up for all claims

| Place of search | Date of completion of the search | Examiner |
|---|---|---|
| THE HAGUE | 3 February 1994 | Van Zoest, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)